# EUROPEAN PATENT APPLICATION

(11) **EP 2 455 590 A1**
(43) Date of publication of application: **23.05.2012**
(21) Application number: 10191732.6
(22) Date of filing: 18.11.2010
(51) Int. Cl.: F01D 17/16, F02C 6/12, F01D 17/14, F01D 25/16

(54) **A variable geometry distributor for a turbine, particularly for a motor vehicle turbocharger assembly**

(71) Applicant: Fiat Powertrain Technologies S.p.A., 10135 Torino (IT)
(72) Inventor: Ferrazzi, Francesco, 13135, Torino (IT)
(74) Representative: Notaro, Giancarlo

(57) **Abstract**

A variable geometry distributor for a turbine, particularly for a motor vehicle turbocharger assembly, comprising:
- a first annular element (2),
- a second annular element (4), coaxial to said first annular element (2) and with respect to a longitudinal axis (X) of said distributor (1), and mobile with respect to said first annular element (2), wherein:
- said first and second annular element (2, 4) comprise, respectively, first and second profiles (14, 46) defining, through their coupling, a plurality of blades (14, 46) separated by openings (V),
- a movement of said second annular element (4) with respect to said first annular element (2) determines a variation of geometry (Aₘᵢₙ, Aₘₐₓ) of said openings (V).

The movement of the second annular element (4) with respect to the first annular element (2) is a rotation (DC, DO) around said longitudinal axis (X) which determines the variation of geometry (Aₘᵢₙ, Aₘₐₓ) of said openings (V).

## Description

### Field of the invention

The present invention refers to a variable geometry distributor for a turbine, particularly for a motor vehicle turbocharger assembly, comprising:
- a first annular element,
- a second annular element, coaxial to said first annular element and with respect to a longitudinal axis of said distributor, and movable with respect to said first annular element,
   wherein:
- said first annular element and second annular element comprise, respectively, first and second profiles defining, through their coupling, a plurality of blades separated by openings,
- a movement of said second element with respect to said first element determines a variation of geometry of said openings.

### Technical drawback and description of the prior art

The choice of the characteristics of the induction system plays a fundamental role when designing a traction thermal engine, whether intended for use on cars or heavy duty trucks.

Should the choice fall on the use of a forced induction, for example supercharging the engine by means of a turbocharger assembly actuated through the exhaust gases of the engine, besides the benefits achieved by adopting such solution one should also consider some well known disadvantages.

The most important of these disadvantages, as regards with the present description, concerns the dynamic behaviour of the turbocharger assembly during a acceleration transient starting from a low load and low engine speed condition of the thermal engine.

When the engine is in the low load and low engine speed condition and the driver of a vehicle requests a quick increase of torque output by the engine, the inertia of the rotating parts of the turbocharger assembly is such that the latter not only does not provide any benefits in terms of performance of the engine but it even hinders the increase of performance required by the driver. The flow rate and speed of the exhaust gases supplying the turbine of the turbocharger assembly are, in the first instance of the transient, insufficient to increase the speed of the rotating parts of the turbocharger assembly and even the impeller of the compressor can constitute a choking for the intake.

The macroscopic effects of what has been described above result, as well known, in a dilatation of the times required for increasing the torque supplied by the engine and the rotational speed of the rotating parts of the turbocharger assembly. Such delay phenomena are generally macroscopically described by the term "turbo-lag" to indicate the substantial delay of response of the turbocharger assembly with respect to the requests of the driver.

Among the various solutions to such technical problem, available within the prior art, solutions based on the variable geometry turbine are particularly important as regards the present description.

As known to the man skilled in the art, the term "variable geometry turbine" is used to indicate - in the automotive industry - a centripetal turbine comprising a fixed geometry impeller and a variable geometry distributor.

Prior art solutions include, for example, a solution providing a distributor comprising blades rotatable around longitudinal axes and controlled through leverages and a solution in which the distributor comprises a fixed geometry blading mounted on a first axially movable element and a second fixed element having a plurality of apertures, whose shape is compatible with that of the blades, which are co-penetrated by the blades on the first element to vary the geometry of the openings defined thereby.

The first prior art solution described reveals drawbacks related to the high number of components required, as well as the difficulty related to installation on a spark ignition engines in which the high temperatures achieved by the exhaust gases can limit the operation of the distributor.

The second prior art solution described has the serious drawback lying in that it can cause a considerable increase of the production costs of the turbine (and of the entire turbocharger assembly).

The presence of a fixed geometry blading, which is made to slide within the apertures obtained on a fixed element with the aim of varying the geometry of the openings, requires maintaining extremely accurate machining tolerances both on the blades and on the apertures intended to house them, so as to avoid sticking or locking during the operation of the turbocharger assembly.

### Object of the invention

The object of the present invention is that of overcoming the previously described technical drawbacks.

In particular, the object of the present invention is that of providing a variable geometry distributor for a turbine, particularly for a motor vehicle turbocharger assembly, that is inexpensive, provides good performance and that is substantially free of problems related to sticking and locking during operation, even under harsh operating conditions.

### Summary of the invention

The object of the present invention is attained by a distributor having the features forming the subject of the claims that follow, which form an integral part of the technical disclosure herein provided in relation to the invention. In particular, the object of the invention is attained by a distributor having all the features listed at the beginning of the present description and further characterized in that said movement of the second annular element with respect to the first annular element is a rotation around the longitudinal axis of the distributor which determines the variation of geometry of the openings.

### Brief description of the drawings

The present invention will now be described with reference to the attached drawings, provided purely by way of non-limiting example, wherein:
- figure 1 is a perspective view of a variable geometry distributor according to the present invention,
- figure 2 is an exploded perspective view corresponding to figure 1,
- figures 3A-3F illustrate an assembly sequence of the distributor of figure 1,
- figure 4 is a perspective view of a turbocharger assembly comprising the variable geometry distributor according to the present invention,
- figure 5 is a sectional view according to the line V-V of figure 4,
- figure 6 is an exploded view corresponding to figure 4,
- figures 7A-C illustrate a sequence of installation of the variable geometry distributor according to the invention on a turbocharger assembly,
- figure 8 is a perspective view of the variable geometry distributor according to the invention connected to an actuation element, and
- figures 9A-B illustrate two operative configurations of the variable geometry distributor according to the invention.

### Detailed description of the invention

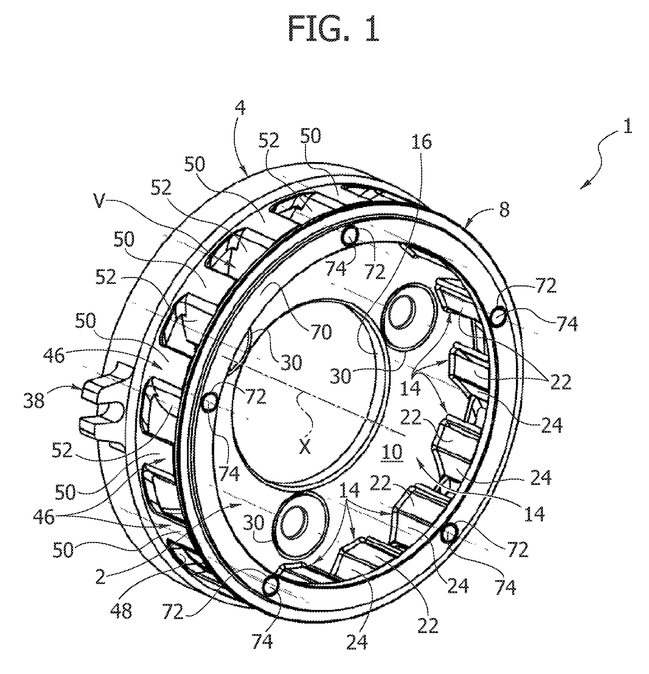

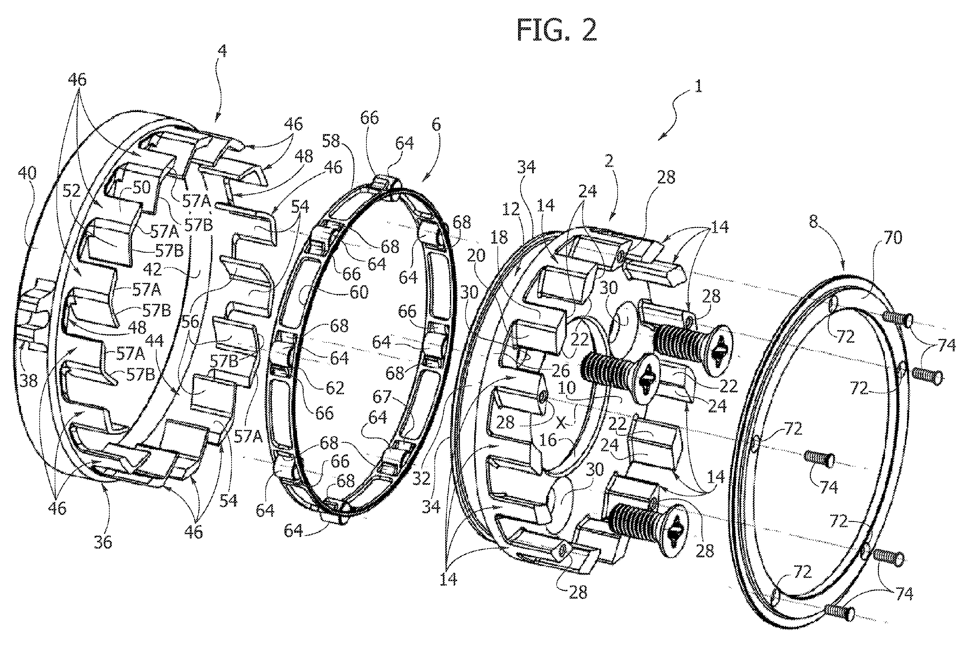

A variable geometry distributor according to the present invention is indicated with 1 in figure 1 (in the following, for the sake of brevity, at times indicated with term "distributor 1"). Also with reference to figure 2, the distributor 1 comprises, all arranged coaxially with respect to each other and with respect to a longitudinal axis X thereof:
- a first annular element 2,
- a second annular element 4,
- a rolling ring 6 interposed between the first and the second annular element 2, 4, and
- a spacer ring 8.

With reference to figure 2, the first annular element 2 comprises a flange 10 and a collar 12 integral with the flange 10. On one side - opposite with respect to the collar 12 - there is provided on the flange 10 a plurality of first profiles 14 developing axially parallel to the axis X and arranged, angularly equally spaced, along a circumference (with centre on the axis X) around a central through hole 16 traversing the flange 10.

Each profile 14 is substantially rhomboid-shaped and comprises a first and a second outer side 18, 20 and a first and a second inner side 22, 24 opposite, respectively, to the first and to the second outer sides 18, 20.

More in detail, each first outer side 18 is continuous and lies flush with respect to an outer cylindrical surface 26 of the flange 10.

In some profiles 14 there are also provided threaded holes (one for each profile) 28 with axis parallel to the axis X. Furthermore, internally with respect to the crown defined by the profiles 14 there are provided three through holes 30 (spaced by 120°).

The collar 12 comprises a first track 32 bordered by a ridge 34 radially projecting outwards (this indicating a radial direction moving away with respect to the axis X) with respect thereto.

The second annular element 4 comprises a body 36 which in turn includes:
- a fork element 38 provided on an outer cylindrical surface 40,
- a second track 42 provided on an inner cylindrical surface 44 and having a diameter larger than the first track 32, and
- a plurality of second profiles 46 developed axially parallel to the axis X and provided on a front surface 48.

The profiles 46 are the same number as the profiles 14 on the first annular element 2, they have a substantially identical axial development and they are arranged angularly equally spaced along a circumference with centre on the axis X.

Each second profile 46 is substantially L-shaped and comprises respective third and fourth outer side 50, 52 and third and fourth inner sides 54, 56.

The sides 54, 56 are opposite with respect to the sides 50, 52 and they are substantially identical, respectively, to the first and to the second outer side 18, 20 of each profile 14. Furthermore, the sides 50, 54 define a first strip 57A of the profile 46, while the sides 52, 56 define a second strip 57B of the profile 46.

Each side 54 lies flush with respect to the inner cylindrical surface 44, substantially defining a single continuous surface.

The rolling ring 6 comprises an annular-shaped cage 58 in turn including a plurality of first compartments 60, free, alternated with second compartments 62. In each of the compartments 62 there is housed a rolling body 64, in particular a cylindrical roller.

More in detail, each compartment 62 comprises a first curved strip 66 projecting externally with respect to the cage 58 and a second curved strip 68 substantially identical to the strip 66 but projecting internally with respect to the cage 58. The two curved strips 66, 68 provide to the rolling body 64 two diametrically opposite abutment surfaces, through which it is radially constrained within the corresponding compartment 62.

It should be observed that each rolling body 64 is radially constrained solely with respect to movements in a direction that causes the insertion thereof within each of the compartments 62, while it is completely free in the opposite direction. This means that each rolling body 64 substantially lies on the strips 66, 68.

The spacer ring 8 comprises a circumferential relief 70, projecting in the direction of the axis X, on which there are provided through holes 72 at homologous positions with respect to the threaded holes 28 on the first profiles 14.

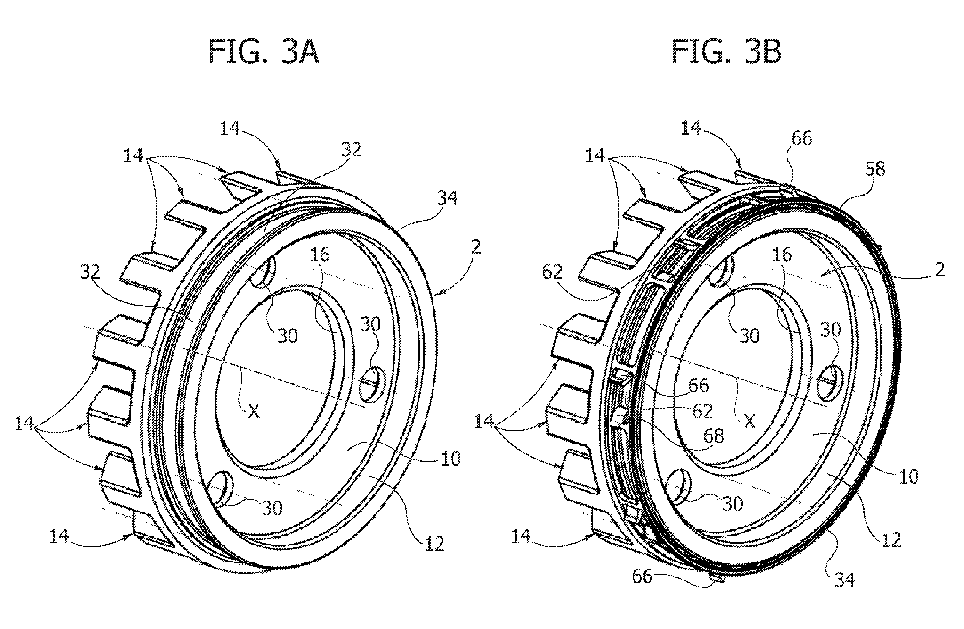

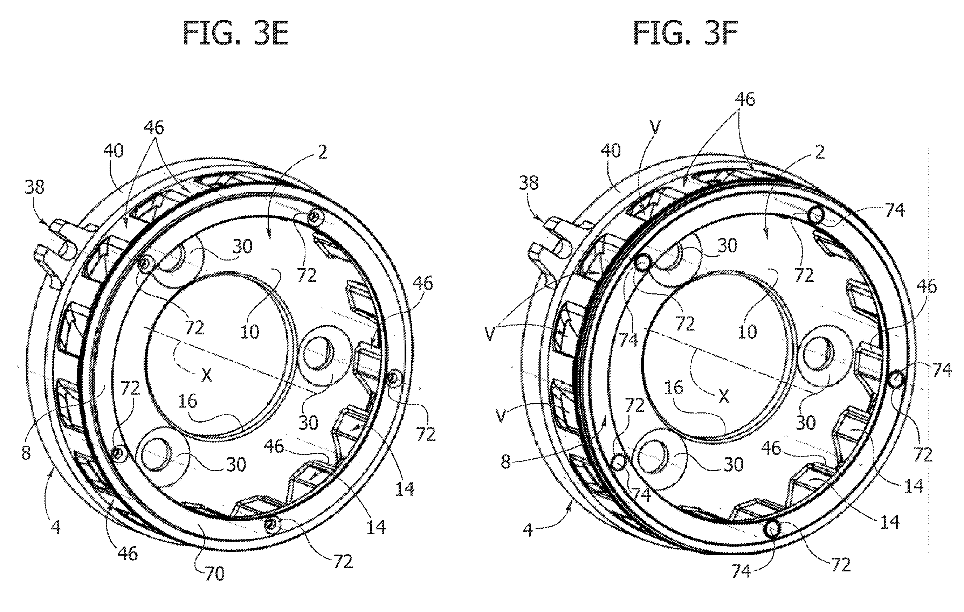

Methods for coupling the previously described components will now be described with reference to figures 3A-F.

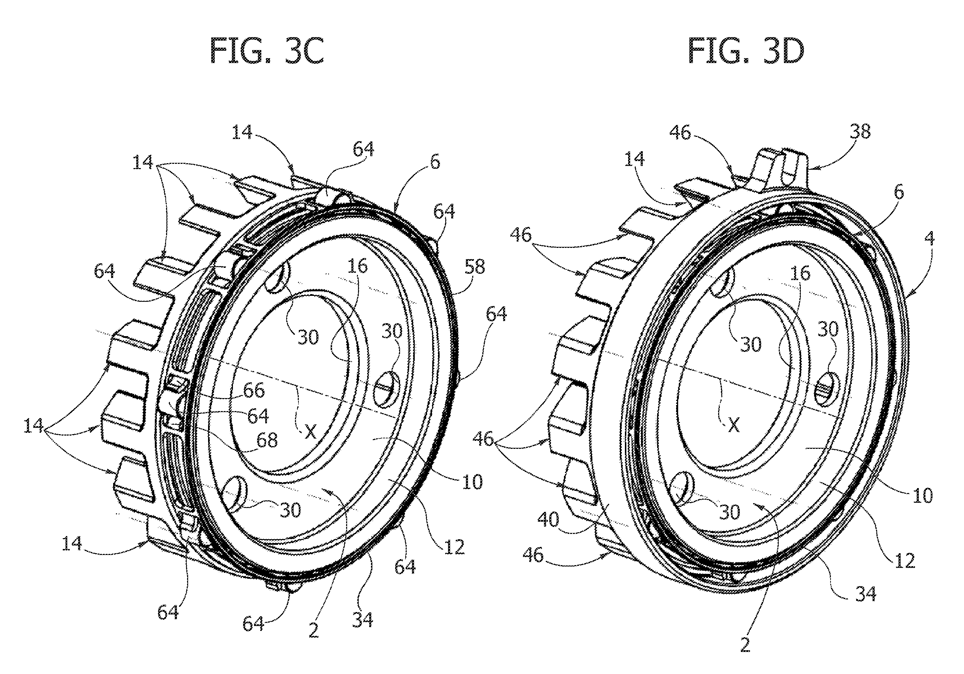

With reference to figures 3A-B, the cage 58 is fitted on the first annular element 2 by arranging it around the track 32 substantially between the flange 10 and the ridge 34. With reference to figure 3C, the rolling bodies 64 are placed in the compartments 62 and they are brought into contact with the track 32. Thus, the rolling ring 6 is fitted on the collar 12 and axially constrained between the ridge 34 and the flange 10.

With reference to figure 3D, the second annular element 4 is axially fitted on the first annular element 2 in a direction parallel to the axis X with direction developing from the profiles 14 to the collar 12. Substantially, the approaching of the annular element 4 to the annular element 2 and the subsequent coupling occur starting from the side of the flange 10 on which the profiles 14 are provided.

The coupling of the second annular element 4 to the first annular element 2 is provided in a manner such that each second profile 46 is arranged between two adjacent first profiles 14 having the first strip 57A radially external with respect to the profiles 14 and in variable covering relation (in particular through the third inner side 54) with the first outer side 18. Furthermore, the mounting is provided in a manner such that the second strip 57B is comprised between two successive profiles 14.

The term "variable covering" is used to define, at least partly referring to the terminology typical of the field of fluid power systems, a condition in which the strip 57A is arranged on the outer side 18, separated by a slight radial play which prevents mutual adherence, and it is slidable with respect thereto for, alternatingly, uncovering and covering it. Hence, as clear from the subsequent description, each profile 46 is movable with respect to the corresponding profile 14 for, alternatingly, uncovering and covering it.

The coupling between the annular elements 2, 4 is additionally such that the rolling ring 6 is radially comprised between the first track 32 and the second track 42, with the rolling elements 64 received in and at contact with the first track 32 internally with respect to the cage 58 and with the second track 42 externally with respect to the cage 58. This allows defining a rolling bearing wherein:
- the collar 12 serves the purpose of an inner ring and the first track 32 serves the purpose of an inner track,
- the body 36 serves the purposes of an outer ring and the second track 42 serves the purpose of an outer track.

With reference to figures 3E-F, the spacer ring 8 is thus fixed at the front part to the distributor 1, and in particular to the first annular element 2, using screws 74 which traverse the through holes 72 ending up engaged within the threaded holes 28 on the first profiles 14. Thus, the second annular element 4 is substantially constrained axially with respect to the first annular element 2. Furthermore, it should be observed that in the embodiment herein illustrated the ring 8 has a radial development substantially equivalent to that of the profiles 14 and 46 coupled to each other.

Due to the presence of the rolling ring 6, the second annular element 4 can rotate relatively to the first annular element 2 around the axis X minimizing friction therebetween.

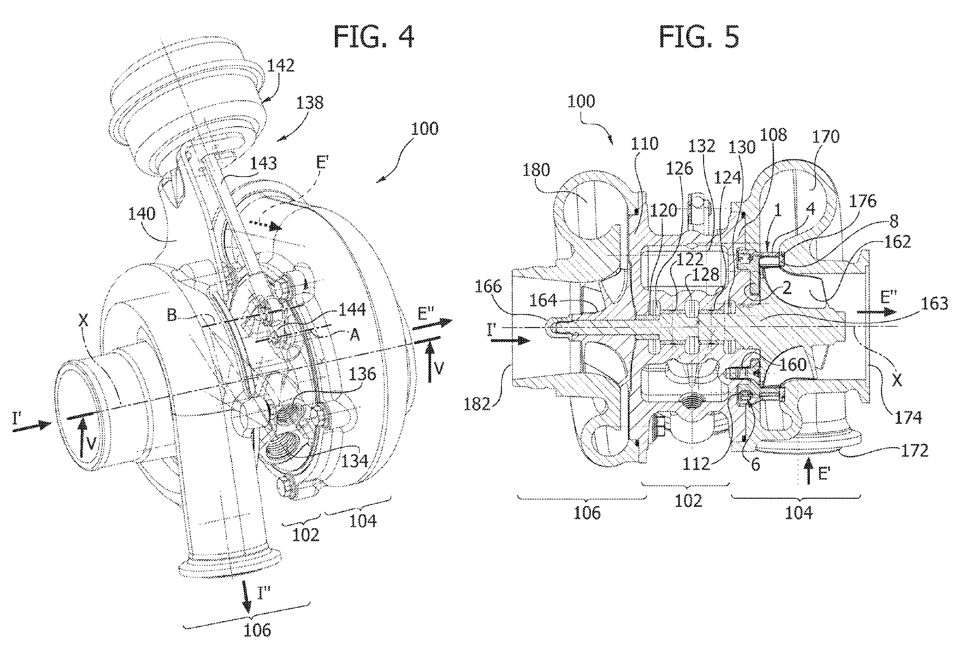

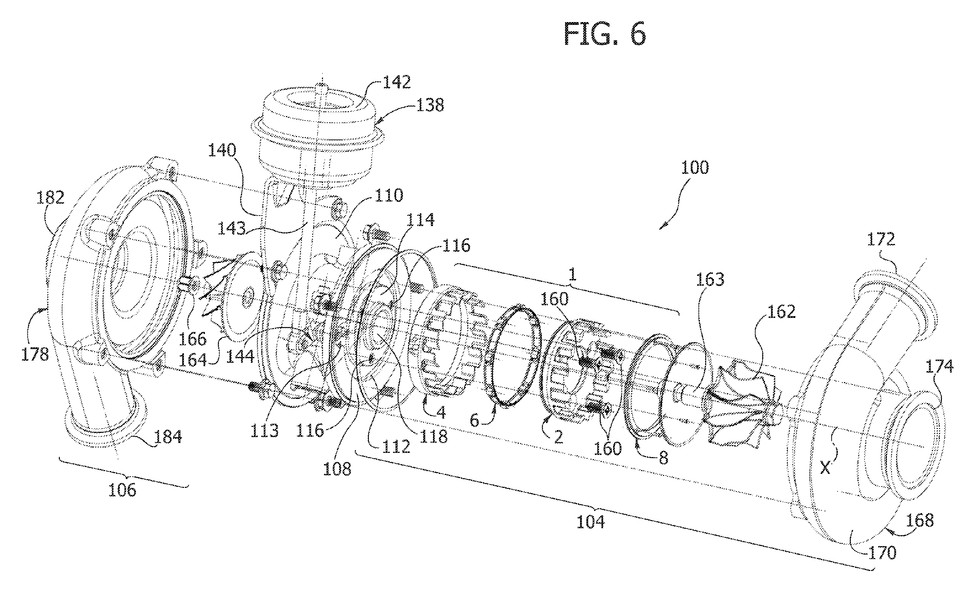

With reference to figures 4 to 6, a turbocharger assembly comprising the distributor 1 is indicated in its entirety with reference number 100. The turbocharger assembly 100 comprises a central body 102, a turbine 104 and a compressor 106 arranged on opposite sides with respect to the central body 102. With reference to figures 5, 6, the turbine 104 includes the distributor 1.

The central body 102 comprises a first and a second connection flange 108, 110 parallel with respect to each other and arranged on opposite sides with respect thereto. In the first connection flange 108 there is provided an annular-shaped recess 112 provided for receiving the distributor 1. Within the recess 112 there is provided a relief 114 comprising three threaded holes 116 arranged at a homologous position with respect to the holes 30 on the first annular element 2.

The central body 102 is traversed by a central through cavity 118 in which there are housed bearings 120, 122, 124. The cavity 118 is surrounded by annular channels 126, 128, 130, 132 in fluid communication with the bearings 120, 122, 124 and with a first and a second flow port 134, 136. This defines a lubrication circuit developing within the central body 102 and which receives and discharges oil through the ports 134, 136.

With reference to figures 4 to 8, on the central body 102 there is installed an actuation unit 138. The actuation unit 138 is fixed to the central body 102 through a bracket 140 connected to the second connection flange 110 and comprises:
- an actuator 142 having a stem 143,
- a rocker arm 144 rotatable around an axis A having a position fixed in space and articulated with respect to the stem 143, and
- a stop member 146.

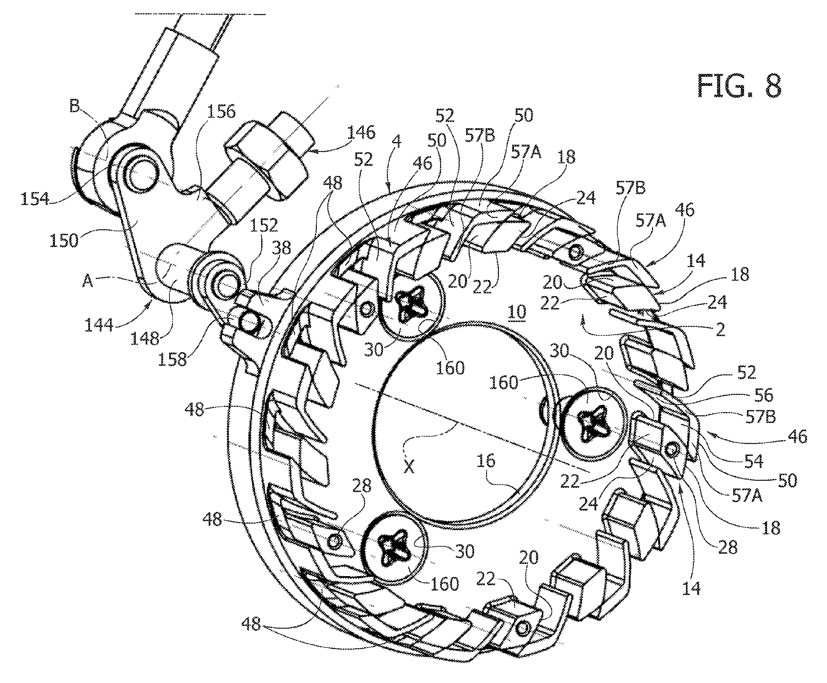

More in detail, with reference to figure 8, the rocker arm 144 comprises a pin 148 rotatably mounted within a seat provided on the central body 102 and to which there are rotatably connected a first and a second arm 150, 152. The first arm 150 comprises an end 154 articulated to an end of the stem 143 around a second axis B having a position variable in space and further comprises a shoulder 156 cooperating with the stop member 146. The second arm 152 comprises, at an end thereof, a peg 158 and it is arranged within the seat 113 provided on the connection flange 108.

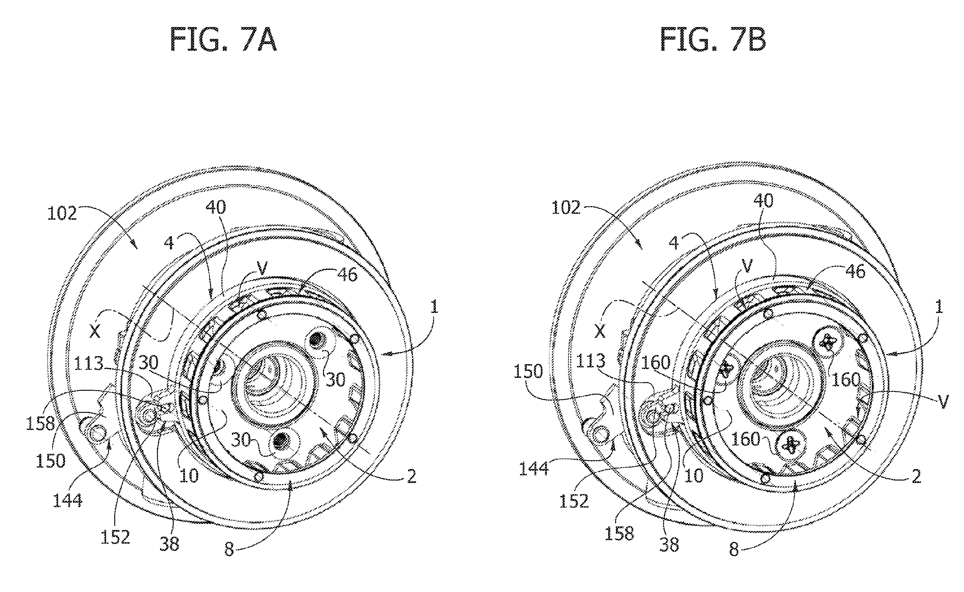

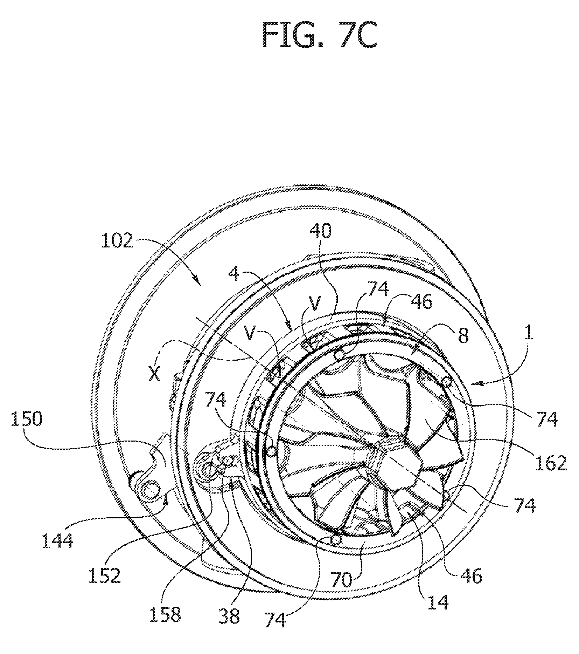

With reference to figures 5, 7, the distributor 1 is installed on the central body 102 so that the rolling bearing defined by the tracks 32, 42 and by the rolling cage 6 is substantially arranged within the recess 112 and it is fixed to the central body 102 by means of three screws 160 traversing the holes 30 and engaged within the threaded holes 116.

The fork element 38 is arranged within the seat 113 and receives the peg 158, thus coupling the rocker arm 144 to the second annular element 4.

With reference to figures 5, 6 and 7C, a first impeller 162 integral with a shaft 163 is inserted within the distributor 1 so that the shaft 163 traverses the through cavity 118. Thus, the shaft 163 is rotatably supported by the bearings 120, 122, 124 and also fitted thereon, at an opposite side with respect to the first impeller 162, is a second impeller 164 constrained axially by a nut 166.

With reference to figure 6, the turbine 104 comprises a body 168 having a volute 170 in fluid communication with an inlet port 172 and a discharge port 174.

Coaxially to the discharge port 174 there is provided, within the body 168, a circular seat 176 (figure 6) whose shape is compatible with the spacer ring 8. With reference to figure 5, the body 168 is fixed to the first connection flange 108 - by means of screws - by fitting on the distributor 1 and around the impeller 162. In the seat 176 there is provided the spacer ring 8, while the volute 170 directly communicates with the distributor 1 and the discharge port 174 directly communicates with the impeller 162.

In a substantially analogous manner, the compressor 106 comprises a body 178 having a volute 180 in fluid communication with an intake port 182 and a delivery port 184. The body 178 is fixed to the second connection flange 110 by means of screws and it is fitted around the impeller 164 so that it directly faces the volute 180 and the intake port 182.

It should be observed that for the sake of description simplicity the impellers 162, 164 have been described as independent elements, while, as known to the man skilled in the art, they form an integral part, respectively, of the turbine 104 and of the compressor 106.

### The distributor 1 operates as follows.

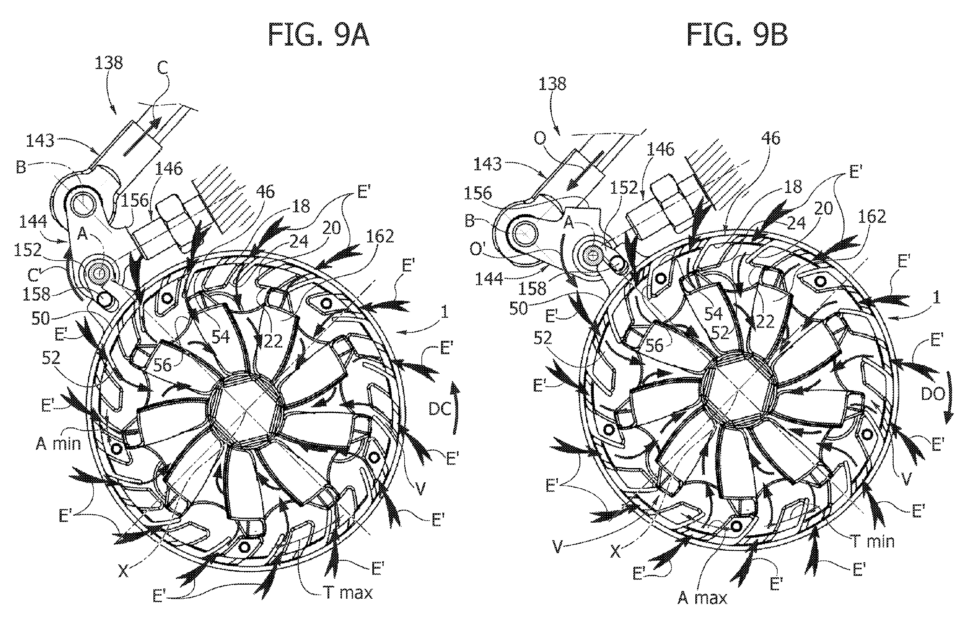

With reference to figures 9A and 9B, the coupling between each profile 14 and a corresponding profile 46, described previously, defines a blading wherein each blade is defined by a profile 46 and a profile 14 and it is separated with respect to an adjacent blade by an opening V, also defined by the coupling of the profiles 14, 46.

More precisely, each opening V has a variable extension(just like the blades that delimit it) by means of a rotation around the axis X of the second annular element 4, mobile, with respect to the first annular element 2, fixed to the central body 108. Thus, the first annular element 2 will be indicated using the term "fixed semi-distributor 2" and the second annular element will be indicated using the term "mobile semi-distributor 4".

Consequently, the profiles 14 integral with the annular element 2 will be indicated using the term "fixed profiles 14", while the profiles 46 integral with the annular element 4 will be indicated using the term "mobile profiles 46". The openings V have an extension (generally intended as the distance between subsequent blades - see the following description - ) variable between a minimum extension Aₘᵢₙ, corresponding to a minimum flow area, and a maximum extension Aₘₐₓ corresponding to a maximum flow area.

The minimum extension Aₘᵢₙ (in figures 9A, B the extension is conventionally measured along an average circumference of the distributor 1) corresponds to a condition, illustrated in figure 9A, in which the mobile semi-distributor 4 is rotated with respect to the fixed semi-distributor 2 so that the mobile profiles 46 uncover the fixed profiles 14 almost completely. In such condition the distance between the sides 56 and 20 of two coupled profiles 14, 46 is maximum and the covering of the first outer side 18 by the strip 57A is minimum. Consequently, the distance between the side 52 of each mobile profile 46 and the side 24 of the fixed profile 14 of the adjacent blade (which defines the extension of each compartment V) is minimum.

On the contrary, assuming as the extension of each blade the distance between the sides 24 and 52 of each of the profiles 14, 46 thereof, in the condition wherein the extension of the openings V is equivalent to Aₘᵢₙ, the blades have a maximum extension indicated with Tₘₐₓ.

The maximum extension Aₘₐₓ corresponds to a condition in which the relative position between the mobile semi-distributor 4 and the fixed semi-distributor 2 is such that in each blade the side 56 of the mobile profile 46 is at contact with the side 20 of the fixed profile 14 and the side 18 is completely covered by the strip 57A. Consequently, the distance between the side 52 of each mobile profile 46 and the side 24 of the fixed profile 14 of the adjacent blade (which defines the extension of each compartment V) is maximum. As a logic consequence, the blades have a minimum extension indicated with Tₘᵢₙ.

Furthermore, it should be observed that the openings V have an axial development substantially equivalent to that of the profiles 46, 14, thus of the blades of the distributor 1 defined thereby. The openings V are thus, in the embodiment herein illustrated, substantially comprised axially between the flange 10 and the spacer ring 8.

The distributor 1, arranged fluid dinamically upstream of the impeller 162, can be actuated to vary the flow speed of the exhaust gases that flow through the impeller 162. The distributor 1 can be continuously adjusted between two extreme operative positions illustrated in figures 9A and 9B comprising:
- a first position, or "closed distributor" position (figure 9A)wherein the openings V have extension Aₘᵢₙ, and
- a second position, or "open distributor" position (figure 9B) wherein the openings V have extension Aₘₐₓ.

With reference to figures 4, 5, 9, a flow of a high pressure exhaust gas E' enters into turbine 104 through the inlet port 172, traverses the distributor 1 and the impeller 162 and exits therefrom as a low pressure exhaust gas E" . The flow of the exhaust gas traverses the distributor 1 and flows through the impeller 162 causing a rotation of the latter which drives the second impeller 164 in rotation. The latter intakes air I' substantially at ambient pressure and conveys it through the volute 180 to the delivery port 184 from which pressurized air I'' exits, such air moving towards the engine intake manifold.

The relative position between the semi-distributors 2 and 4 continuously varies between "closed distributor" and "open distributor" positions depending on the point of operation of the engine to which the turbocharger assembly 100 is coupled.

Under low load and low engine speed conditions of the engine, the flow rate of the exhaust gas E' entering the turbine 104 is quite low. Under such conditions - through the actuation unit 138 - a rotation in direction DC (represented anticlockwise herein) of the mobile semi-distributor 4 is operated with the aim of reducing the extension of the openings V and thus the flow area defined thereby.

In particular, by controlling a motion of the stem 143 in a direction C such to cause a substantial retraction thereof within the actuator 142 causes a rotation in direction C' of the rocker arm 144 around the axis A, fixed in space, which eventually causes a rotation in the direction DC around the longitudinal axis X of the mobile semi-distributor 4 with respect to the fixed semi-distributor 2 and due to the coupling between the fork element 38 and the peg 158. It should be observed that the rotation of the rocker arm 144 in direction C' can continue until the shoulder 156 comes into contact with the stop member 146, whose position actually defines the minimum extension of the openings V.

The rotation in direction DC causes a sliding of each mobile profile 46 with respect to the corresponding fixed profile 14 which is thus gradually uncovered thereby providing the movement of each side 56 away from the corresponding side 20 reducing the extension of the openings V and the flow area for the gases E'.

The reduction of the flow area causes an increase of the speed of the gases which traverse the distributor 1 and flow through the impeller 162, leading to an increase of the rotational speed of the latter and of the impeller 164 with ensuing increase of the flow rate and the pressure of the air I" conveyed to the engine. Thus, the position illustrated in figure 9A substantially corresponds to an optimal condition in case of low load and low engine speed operation of the thermal engine to which the turbocharger assembly 100 is coupled, given that this allows limiting the occurrence of turbo-lag phenomena increasing the flow speed of the gas that flows through the impeller 162.

Starting from the condition illustrated in figure 9A the increase of the rotational speed of the thermal engine (and the impellers 162, 164) and the torque developed thereby requires adjusting the distributor 1 with the aim of preventing an uncontrolled increase of the boost pressure (similar to what occurs in the adjustment by means of a wastegate valve) and an uncontrolled increase of the speed of the impellers 162, 164.

For such purpose, a movement of the stem 143 in direction O (opposite to direction C) causing a rotation in direction O' (herein represented anticlockwise) of the rocker arm 144 which leads to a rotation in direction DO (opposite to the direction O' and herein represented clockwise) around the longitudinal axis X of the mobile semi-distributor 4 with respect to the fixed semi-distributor 2, is controlled by means of the actuation device 138.

Thus, the sliding of each mobile profile 46 with respect to the corresponding fixed profile 14 occurs in an opposite direction with respect to what has been described previously causing a gradual covering of each fixed profile 14. In particular each side 56 is approached to the corresponding side 20 until it comes into contact therewith.

Thus, the extension of the openings V increases (up to Aₘₐₓ) and the flow speed of the gases E' which traverse the distributor 1 and flow through the impeller 162 decreases due to the increase of the flow area.

This reduces the mechanical work delivered to the impeller 162 (and thus that transferred to the impeller 164) so as to control the rotational speed of the impellers and the boost pressure supplied by the turbocharger assembly 100.

In brief, the mobile semi-distributor 4 can be actuated in rotation around the axis X with respect to the fixed semi-distributor 2 to vary the geometry, in particular the extension, of the openings V and the flow area for the gas which traverses the distributor 1 through the variation of the covering of each fixed profile 14 by the corresponding mobile profile 46. In particular, in figure 9A the profiles 46 rotate with the mobile semi-distributor 4 gradually uncovering the profiles 14 and reducing the extension of the openings V.

Vice versa, in figure 9B the mobile profiles 46 rotate with the mobile semi-distributor 4 gradually covering each profile 14 and increasing the extension of the openings V.

Contrary to the prior art solutions, both the blades and the openings of the distributor 1 have a variable geometry. The variation is, so to speak, complementary: an increase of the extension of the blades corresponds to a reduction of the extension of the openings and vice versa.

Furthermore, it should be observed that the direction imparted to the flow of the gas E' is substantially constant regardless of the relative position of the semi-distributors 4, 2. Actually, each compartment V is delimited by the side 52 of a mobile profile 46 and by the side 24 of the fixed profile 14 of the adjacent blade. The geometry of the sides 52, 24 and the mutual attitude thereof imparts the direction to the gases which traverse the distributor 1: the relative variation of position between the semi-distributors 2, 4 substantially solely varies the distance between the sides 52, 24, but not the mutual attitude thereof.

In other words, what has been described is equivalent to a condition wherein the walls of a conduit can be approached or moved away from each other without modifying the attitude of one with respect to the other.

Thus, having a fixed and predetermined direction of the gases which traverse the distributor and flow through the impeller 162 it is possible to optimize the geometry of the latter depending on such direction, thus guaranteeing - under any operating condition - that the angle at which the gases flow through the blades of the impeller is the optimal one.

The distributor 1 according to the invention and consequently the turbocharger assembly 100 on which it is installed reveal several clear advantages.

With respect to the first prior art solution described, the number of components required to provide the distributor 1 is considerably lower, with ensuing reduction of the distributor 1 and turbocharger assembly 100 production costs.

With respect to the second prior art solution described, the distributor 1 does not require fine machining tolerances on all the surfaces, but mainly only on the tracks 32, 42 and possibly on the sides 18, 20 and 54, 56.

Furthermore, the presence of the rolling ring 6 guarantees an almost total absence of friction between the annular elements 2, 4, hence making the distributor 1 substantially free of mobile parts locking or "sticking" phenomena.

Obviously, the construction details and the embodiments may be widely varied with respect to what has been described and illustrated purely by way of non-limiting example, without departing from the scope of protection of the present invention, as defined by the attached claims.

## Claims

1. A variable geometry distributor (1) for a turbine, particularly for a motor vehicle turbocharger assembly, comprising:
- a first annular element (2),
- a second annular element (4), coaxial to said first annular element (2) and with respect to a longitudinal axis (X) of said distributor (1), and movable with respect to said first annular element (2),
wherein:
- said first and second annular element (2, 4) comprise, respectively, first and second profiles (14, 46) defining, through their coupling, a plurality of blades (14, 46) separated by openings (V),
- a movement of said second annular element (4) with respect to said first annular element (2) determines a variation of geometry (Aₘᵢₙ, Aₘₐₓ) of said openings (V),
the distributor (1) being **characterised in that** said movement of the second annular element (4) with respect to the first annular element (2) is a rotation (DC, DO) around said longitudinal axis (X) which determines said variation of geometry (Aₘᵢₙ, Aₘₐₓ) of said openings (V).

2. The distributor (1) according to Claim 1, **characterised in that** said second annular element (4) is fitted axially and externally on said first annular element (2) so that each of said second profiles (46) is arranged between two adjacent first profiles (14), wherein each second profile (46) is movable with said second annular element (4) to uncover or cover a first profile (14) coupled therewith.

3. The distributor (1) according to Claim 2, **characterised in that** said second annular element (4) is rotatable with respect to said first annular element in a first direction (DC) which causes the uncovering of said first profiles (14) to reduce the extension (Aₘᵢₙ) of said openings (V) and in a second direction (DO) which causes the covering of said first profiles to increase the extension (Aₘₐₓ) of said openings (V).

4. The distributor (1) according to Claim 2, **characterised in that** said first profiles (14) have a substantially rhomboid-shaped section, they are arranged angularly equally spaced along a circumference and they are developed parallel to said longitudinal axis (X) of said distributor (1).

5. The distributor (1) according to Claim 4, **characterised in that** said first profiles (14) are provided on a flange (10) of said first annular element (2) and comprise, each:
- a first and a second outer side (18, 20)
- a first and a second inner side (22, 24) wherein said first outer side (18) and second outer side (20) are opposite, respectively, to said first inner side (22) and second inner side (24).

6. The distributor (1) according to Claim 5, **characterised in that** said second profiles (46) are substantially L-shaped comprising:
- a third and a fourth outer side (50, 52), and
- a third and a fourth inner side (54, 56) wherein said third outer side and said third inner side define a first strip (57A) and wherein said fourth outer side and said fourth inner side define a second strip (57B).

7. The distributor (1) according to Claim 6, **characterised in that** the first strip (57A) of each of said second profiles (46) is radially external with respect to said first profiles (14) and in variable covering relation with the first outer side (18) of a corresponding first profile (14).

8. The distributor (1) according to Claim 1, **characterised in that** it comprises a spacer ring (8) fixed at the front part to said first annular element (2).

9. The distributor (1) according to Claim 1, **characterised in that** it comprises a rolling ring (6) interposed between said first and second annular elements (2, 4).

10. The distributor (1) according to Claim 3, **characterised in that** said rolling ring comprises:
- a cage (58), and
- a plurality of rolling bodies (64) inserted in said cage (58).

11. The distributor (1) according to Claim 10, **characterised in that** said cage comprises a plurality of first compartments (60), free, and a plurality of second compartments (62) comprising, each, a first curved strip (66) projecting externally with respect to said cage (58) and a second curved strip (68) projecting internally with respect to said cage (58), each of said rolling bodies (64) being received in a corresponding of said second compartments (62), said first and second curved strips (66, 68) providing abutment surfaces to each rolling body (64).

12. The distributor (1) according to claim 11, **characterised in that** said first annular element (2) comprises a collar (12) whereon a first track (32) is provided and **in that** said second annular element comprises a body (36) whereon a second track (42) is provided, said rolling bodies (64) being received within said first and second tracks (32, 42).

13. A turbocharger assembly (100) comprising a turbine (104) including a distributor (1) according to one or more of Claims 1 to 12.

14. The turbocharger assembly (100) according to claim 13, **characterised in that** it comprises a central body (102) whereon said first annular element (2) is fixed (160).

15. The turbocharger assembly (100) according to Claim 13, **characterised in that** it comprises an actuation unit (138) configured for actuating in rotation, around said longitudinal axis (X), said second annular element (4) with respect to said first annular element (2) to vary the geometry (Aₘᵢₙ, Aₘₐₓ) of said openings (V).
